# EUROPÄISCHE PATENTSCHRIFT

(11) **EP 2 382 029 B1**
(45) Veröffentlichungstag und Bekanntmachung des Hinweises auf die Patenterteilung: **29.06.2016**
(21) Anmeldenummer: 10700749.4
(22) Anmeldetag: 20.01.2010
(51) Int. Cl.: B01D 53/047, B01D 53/77, F02C 3/34, F02C 6/18, F01K 23/10, F01D 17/14

(54) **GASTURBINE MIT STRÖMUNGSTEILUNG UND REZIRKULATION**
GAS TURBINE WITH DIRECT AND RECIRCULATED FLOWS
TURBINE À GAZ AVEC ÉCOULEMENTS DIRECTS ET RECIRCULÉS

(30) Priorität: 23.01.2009 CH 1052009
(43) Veröffentlichungstag der Anmeldung: 02.11.2011
(73) Patentinhaber: ALSTOM Technology Ltd, 5400 Baden (CH)
(72) Erfinder: HOFFMANN, Jürgen, CH-5417 Untersiggenthal (CH); KNÖPFEL, Hans Peter, CH-5605 Dottikon (CH); WETTSTEIN, Hans, CH-8008 Zürich (CH)
(74) Vertreter: Bernotti, Andrea
(86) Internationale Anmeldenummer: PCT/EP2010/050606
(87) Internationale Veröffentlichungsnummer: WO 2010/084119

(56) Entgegenhaltungen:
- EP-A- 1 918 014
- WO-A-00/48709
- WO-A-2004/072443
- US-A1- 2003 131 582
- US-A1- 2007 248 527
- US-A1- 2008 011 160

## Beschreibung

### Technisches Gebiet

Die Erfindung betrifft Verfahren zum Betrieb eines Kombikraftwerks mit einer CO2 Abscheidung sowie ein derartiges Kraftwerk.

### Stand der Technik

Aufgrund der allgemein anerkannten Gefahr einer Klimaveränderung, besteht ein weltweites Interesse, den Ausstoss von Treibhausgasen, insbesondere an CO₂ (Kohlendioxyd) zu reduzieren. Als realistischer Schritt den CO2 Ausstoss in die Atmosphäre innerhalb relativ kurzer Zeit zu reduzieren wird die sogenannte CCS (carbon capture and storage) oder CO₂-Sequestrierung, dass heisst die Abtrennung des CO2 aus dem Wärmekraftprozess eines Kraftwerkes und von der Atmosphäre getrennte Lagerung des abgetrennten CO2, angesehen. Die CO2 Abtrennung erfolgt entweder aus den Abgasen nach der Verbrennung eines kohlenstoffhaltigen Brennstoffes oder durch eine chemische Reaktion, bei der der Kohlenstoff aus dem Brennstoff vor der Verbrennung abgeschieden wird. Die Regeneration von Absorbern, Absorbern oder anderen Mitteln zur CO2 Abscheidung ist Bestandteil des CCS Prozesses.

Die Abscheidung von CO2 nach der Verbrennung, auch Backend Capture oder Post Combustion Capture genannt, ist eine der vielversprechendsten CCS Technologien und insbesondere auch für Kombi-Kraftwerke anwendbar.

Alle bekannten CCS Technologien benötigen eine relative hohe Leistung. Bei dem Backend Capture ist der spezifische Energieaufwand pro Kilogramm abgeschiedenen CO2 umgekehrt proportional zur CO2 Konzentration in den Abgasen aus denen das CO2 abgeschieden wird. Um CO2 aus Gasströmen mit relativ niedrigen CO2-Gehalt abzuscheiden, wie er im Abgas herkömmlicher Gasturbinenkraftwerke oder Kombi-Kraftwerk (Combined Cycle Power Plant oder Gasturbinekraftwerke mit Kraft- Wärmekopplung) zu finden ist, ist entsprechend ein relativ hoher Energieaufwand pro kg abgeschiedenem CO2 erforderlich. Der CO2- Gehalt in den Abgasen ist von der Art der Gasturbine, dem verwendeten Brenngas sowie dem Betriebspunkt der Gasturbine abhängig. Es sind verschiedene Konzepte um die CO2 Konzentration in den Abgasen und damit die Effizienz der Abscheidung zu erhöhen, vorgeschlagen worden. Ein Konzept ist die Abgasrezirkulation, wie sie beispielsweise von O. Bolland and S. Sæther in "NEW CONCEPTS FOR NATURAL GAS FIRED POWER PLANTS WHICH SIMPLIFY THE RECOVERY OF CARBON DIOXIDE" (Energy Convers. Mgmt Vol. 33, No. 5-8, pp. 467-475, 1992) vorgeschlagen wurde. Ein anderes Konzept ist die Reihenschaltung von CCPP, wie sie z.B. in der US2008/0060346 vorgeschlagen wurde. Bei ihr werden die Abgase von einem ersten CCPP abgekühlt und als Einlassgase für ein zweites CCPP genutzt. Die Abgase des zweiten CCPP werden gekühlt und dann zur CO2 Abscheidung geleitet. Damit wird der CO2-Gehalt in den Abgasen praktisch verdoppelt, der Gasamtmassenstrom an zu behandelnden Abgases halbiert und die benötigte Anlagengrösse und Energieverbrauch entsprechend reduziert.

Weiter wurde in der Vergangenheit vorgeschlagen die CO2 Absorption bei erhöhtem Druck durchzuführen. Damit kann aufgrund der reduzierten Volumenströme die Anlagengrösse reduziert werden und eine erhöhte Kapazität des Absorptionsmittels bei erhöhtem Druck ausgenutzt werden. Dafür wird in der WO 00/48709 ein Wiederverdichten der Abgase zur Absorption mit anschliessender Erhitzung und Expansion in einer Turbine vorgeschlagen. Da die Energie zur CO2 Absorption bei hohem Druck umgekehrt proportional zum CO2 Partialdruck ist, könnte idealer Weise der Energieaufwand durch Absorption bei erhöhtem Druck zu einer Effizienzsteigerung führen. Da die zusätzliche Verdichtung unvermeidbare Verluste mit sich bringt, geht aber mindestens ein Teil des positiven Effektes verloren.

Die US2003/0131582 beschreibt einen halbgeschlossenen Gasturbinenprozess mit einem Gemisch aus CO₂ und H₂O als Abgasstrom. Ein Teil des CO₂ wird in diesem Prozess in den Ansaugstrom rezirkuliert nachdem zumindest ein Teil des H₂O durch Kondensation aus dem Abgasstrom ausgeschieden wurde.

Die US2007/0248527 beschreibt eine Gasturbine mit Abgasrezirkulation, wobei aus dem nicht rezirkulierten Abgasen CO₂ abgeschieden wird. Zur CO₂-Abscheidung wird das Abgas zunächst wieder komprimiert.

Die WO 00/48709 beschreibt eine Gasturbine mit Abgasrezirkulation und einem zweiten Wärmekraftprozess, in dem aus dem nicht rezirkulierten Abgasen CO₂ abgeschieden wird. Zur CO₂-Abscheidung wird das Abgas zunächst mit Zwischenkühlung komprimiert, CO₂ abgeschieden und die CO₂ armen Abgase nach Wiedererwärmung unter Leistungsabgabe entspannt.

### Darstellung der Erfindung

Der vorliegenden Erfindung ist die Aufgabe gestellt, ein Verfahren zum auf Gesamtwirkungsgrad optimierten Betrieb eines Kombi-Kraftwerks mit CO2 Abscheidung, das eine kleine Baugrösse der CO2 Absorptionsanlage erlaubt, sowie ein Kraftwerk zur Durchführung dieses Verfahrens vorzuschlagen. Als Kombi-Kraftwerk wird dabei ein CCPP (Combined Cycle Power Plant), auch GUD (Gas- und Dampf- Kombikraftwerk) genannt, oder ein anderes auf einer Gasturbine basierendes Kraftwerk mit Kraft- Wärmekopplung bezeichnet.

Der Kern der Erfindung ist ein Verfahren zur CO2 Abscheidung aus einem Kombi-Kraftwerkes mit Abgasrezirkulation in den Ansaugstrom einer Gasturbine, wobei CO2 aus einem abgezweigten Abgasstrom abgeschieden wird. In dem vorgeschlagenen neuen Verfahren wird eine Aufteilung des Heissgasstroms der Gasturbine in zwei Teilströme nach einer Hochdruckturbine durchgeführt. Ein erster Teilstrom, der Rezirkulationsstrom, verrichtet auf herkömmliche Art Expansionsarbeit, bevor seine Abwärme nutzbar, zum Beispiel in einem Abwärmekessel (im Weiteren HRSG genannt), abgeleitet wird und die Gase in den Ansaugstrom der Gasturbine rezirkuliert werden. Ein zweiter Teilstrom, der Abgasstrom, wird nach der Hochdruckturbine abgezweigt und gekühlt wird, z.B. durch Wärmeabgabe in einem HRSG/ Wärmetauscher, bevor CO2 aus diesem Abgasstrom auf erhöhtem Druckniveau abgeschieden wird.

Vorteil dieses Verfahrens ist die CO2 Abscheidung auf erhöhtem Druckniveau, ohne dass eine Wiederverdichtung der Abgase erforderlich ist. Da mit steigendem Druck die Abgasvolumenströme kleiner werden, erlaubt dies eine kleinere Baugrösse der CO2 Abscheidung. Ausserdem werden Verluste durch Expansion und nachfolgende Wiederverdichtung vermieden und damit der Gesamtwirkungsgrad verbessert.

Abhängig von dem Druckniveau der Abgase nach der CO2 Abscheidung werden diese entweder in einer Luftturbine unter Leistungsabgabe entspannt, oder in dem HRSG/ Wärmetauscher wieder erhitzt und anschliessend in einer Luftturbine unter Leistungsabgabe entspannt. Eine direkte Entspannung oder eine direkte Abgabe der Abgase an die Umgebung ist ausserdem möglich.

In einer Ausführung wird CO2 durch kryogene Abscheidung vom Abgas getrennt. Die vorgeschlagene kryogene Abtrennvorrichtung ist eine Dralldüse durch die der zu behandelnde Gasstrom strömt. In dieser wird das Gas stark beschleunigt und dadurch abgekühlt. Bei ausreichender Vorkühlung sinkt die Temperatur in der Dralldüse unter die Sublimationstemperatur von CO2 und das CO2 fällt aus. Aufgrund des starken Dralls in der Dralldüse wird das sublimierte CO2 durch Zentrifugalkräfte an den Aussenwänden der Düse konzentriert und von dort abgeschieden. Eine derartige Dralldüse ist beispielsweise in der WO2008/017577 beschrieben. Eine geeignete Vorkühlung kühlt den Gasstrom typischerweise auf Temperaturen zwischen -40°C und -60°C. Je nach Dralldüse und zur Verfügung stehenden Druckgefälle ist die Vorkühlungstemperatur einzustellen; Bereiche zwischen -30°C und -70°C sind denkbar. Aufgrund des Druckverlustes der Dralldüse ist der Druck nach Dralldüse deutlich abgesenkt.

In Ausführungen der Erfindung, bei denen der Austrittsdruck nach CO2 Abtrennung über dem Umgebungsdruck liegt, kann eine nutzbringende Expansion in einer nachgeschalteten Turbine vorgesehen werden. In einer Ausführung werden die Druckverhältnisse so gewählt, dass der Druck nach Dralldüse praktisch der Umgebungsdruck oder der Umgebungsdruck plus die Druckverluste von nachgeschalteten Abgasleitungen ist.

Als Hochdruckturbine ist im Rahmen dieser Schrift der Teil einer Turbine bezeichnet, der sich stromab einer Brennkammer und stromauf der Aufteilung des Heissgasstroms befindet. Dabei kann die Turbine eine Ein- oder MehrwellenTurbine sein. Der Teil der Turbine, der sich stromab der Aufteilung des Heissgastroms befindet, wird als Niederdruckturbine bezeichnet. Er kann Teil einer Einwellenturbine sein, die Leistungsturbine einer Mehrwellenturbine sein oder eine separate Luftturbine sein.

In einer Ausführung werden die Heissgase in einer Einwellenturbine entspannt.

In einer weiteren Ausführung der Erfindung werden die Heissgase in einer Mehrwellengasturbine entspannt. Diese Mehrwellenturbine besteht aus einer Kernturbine, auch Gasgenerator genannt, mit auf mindestens einer Welle angeordnetem Verdichter und Turbine und mindestens einer Brennkammer sowie einer nachgeschalteten Arbeitsturbine auf separater Welle. Mehrwellengasturbinen sind beispielsweise für kleinere industrielle Gasturbinen oder sogenannte Aeroderivatives bekannt. Erfindungsgemäss wird hier die Aufteilung des Gasstroms zwischen Kernturbine und Arbeitsturbine durchgeführt und die Arbeitsturbine modifiziert, um sie auf den verkleinerten Abgasstrom, der rezirkuliert wird, anzupassen. Dieser verkleinerte erste Teilstrom verrichtet auf herkömmliche Art Expansionsarbeit, bevor seine Abwärme in einem HRSG weiter genutzt wird und die Abgase in den Ansaugstrom der Gasturbine rezirkuliert werden. Ein zweiter Teilstrom wird vor der letzten Turbinenstufe abgezweigt und gibt seine Abwärme in einem HRSG/ Wärmetauscher ab, bevor CO2 aus diesem Abgasstrom auf erhöhtem Druckniveau abgeschieden wird. Abhängig von dem Druckniveau der Abgase nach CO2 Abscheidung werden die Abgase in dem HRSG/ Wärmetauscher wieder erhitzt und in einer Luftturbine unter Leistungsabgabe entspannt.

In noch einer weiteren Ausführung wird die Gasturbine als Kernturbine ausgeführt, in der die gesamten Heissgase nicht auf Umgebungsdruck, sondern zu einem erhöhen Druckniveau entspannt werden, so dass die Turbine den Verdichter antreibt und keine Arbeit nach aussen abgegeben wird. Die heissen Austrittsgase dieser Kernturbine werden in zwei Ströme aufgeteilt werden. Ein erster Teilstrom wird über eine Arbeitsturbine entspannt, einem HRSG zugeführt und nach Rückkühlung in den Ansaugstrom der Gasturbine rezirkuliert. Der zweite Teilstrom wird durch einen HRSG/ Wärmetauscher geführt, bevor aus diesem Gasmassenstrom C2 auf erhöhtem Druckniveau abgeschieden wird. Abhängig von dem Druckniveau der Abgase nach CO2 Abscheidung werden die Gase in dem HRSG/ Wärmetauscher wieder erhitzt und in einer Luftturbine unter Leistungsabgabe entspannt, ohne Wiedererwärmen in einer Turbine entspannt oder direkt an die Umgebung abgegeben.

In Ausführungen mit CO2 Abscheidung durch Absorption oder Adsorption sind die CO2- armen Abgase auf einem erhöhten Druckniveau verfügbar und sie werden typischerweise nutzbringend in einer nachgeschalteten Turbine entspannt.

Vorteilhaft für diese Anordnungen ist, das der Druck der Gase aus denen CO2 abgeschieden wird deutlich über Ambient ist, wodurch die Anlagengrösse der CO2 Abscheidung reduziert werden kann, da diese in erster Näherung umgekehrt proportional zum Druck ist.

Wenn die Resorption ebenfalls bei Überdruck erfolgt wird ausserdem die Kompressionsarbeit für Transport und Entlagerung des CO2 deutlich reduziert.

Weiter besteht damit die Möglichkeit eine Absorption oder Adsorption unter erhöhtem Druck durch zu führen und bei Umgebungsdruck zu resorbieren bzw. entgasen. Dafür muss nur das flüssige Ab- oder Adsorptionsmittel mit relativ geringem Energieaufwand komprimiert werden, die Absorption oder Adsorption erfolgen und anschliessend die mit CO2 angereicherte Flüssigkeit entspannt werden. Die Resorption oder Entgasung kann so mit relativ geringem Energieaufwand realisiert werden, das CO2 wird allerdings auf einem tieferen Druckniveau frei.

Die Leitungen, Diffusoren, Plena und andere Bauteile zur Führung der heissen Gase nach dem Gaserzeuger sind in einer Ausführung zumindest teilweise gekühlt ausgeführt. Insbesondere wird vorgeschlagen, diese Bauteile mit Dampf zu kühlen. Diese Dampfkühlung wird in den Dampfkreislauf integriert und damit der Frischdampf weiter überhitzt. Durch die Integration in den Dampfkreislauf kann die Frischdampftemperatur deutlich über die eines herkömmlichen Gasturbinenkombikraftwerkes angehoben werden und die Effizienz des Dampfkreislaufes erhöht werden.

Um den Anteil des Rezirkulationsstromes an dem Gesamtmassenstrom durch die Gasturbine zu regeln, wird eine variable Geometrie in mindestens einem der Strömungswege vorgeschlagen. Beispielsweise kann die Geometrie des Strömungsteilers variabel verstellbar sein. Weiter kann beispielsweise mindestens eine Leitschaufelreihe der Niederdruckturbine oder Luftturbine variabel verstellbar sein.

Durch die Abzweigung der Abgase zu einer CO2 Abscheidung bei erhöhtem Druck aus der Turbine wird eine Expansion mit anschliessender Kompression vermieden. Verluste in Turbine und Verdichter werden damit ebenfalls vermieden.

In einer weiteren Ausführung wird das Verfahren auf ein Kombi-Kraftwerk mit einer Gasturbine mit sequentieller Verbrennung vorgeschlagen. Herkömmliche Gasturbinen mit sequentieller Verbrennung sind beispielsweise aus der EP0620362 bekannt. Eine derartige Gasturbine hat mindestens einen Verdichter, dem eine erste Brennkammer und eine erste Turbine folgt. Der Abgasstrom der ersten Turbine wird in einer zweiten Brennkammer wieder erwärmt, bevor er in einer zweiten Turbine weiter entspannt wird.

In dem vorgeschlagenen neuen Verfahren wird die Heissgasströmung in der zweiten Turbine aufgeteilt. Ein erster Teilstrom verbleibt in der zweiten Turbine und leistet Expansionsarbeit, gibt in einem HRSG seine nutzbare Wärme ab und wird rezirkuliert. Ein zweiter Teilstrom wird vor der letzten Turbinenstufe der zweiten Turbine abgezweigt und gibt in einem HRSG/ Wärmetauscher seine nutzbare Wärme ab, bevor er einer CO2 Abscheidung zugeführt wird. Weitere Verfahren zur Nutzung der CO2 armen Abgase mit oder ohne Wiedererhitzung und Expansion ergeben sich dem Fachmann aus den Ausführungen zur Gasturbinen mit einfacher Brennkammer.

Neben dem Verfahren ist eine Kraftwerksanlage für die optimierte CO2 Abscheidung, gekennzeichnet durch wenigstens eine Heissgasabzweigung in einer Turbine, eine Rückführung von Abgasen in die Verdichtereintrittsluft, sowie eine Abscheidanlage zur CO2 Abscheidung aus den abgezweigten Heissgasen, Gegenstand der Erfindung.

Eine Ausführung ist ein Kombi-Kraftwerk mit Strömungsverzweigung zwischen Hochdruck- und Niederdruckturbine der Gasturbine. Dabei sind die Hochdruck- und Niederdruckturbine je eine mindestens einstufige Turbine. Diese Ausführung verfügt, wie alle weiteren Ausführungen, über eine Vorrichtung zur Kühlung und Abwärmenutzung des zu rezirkulierenden Gasstroms, eine Vorrichtung zur Kühlung und Abwärmenutzung des abgezweigten Abgasstromes sowie eine Vorrichtung zur Abscheidung von CO2 aus dem abgezweigten Abgasstrom.

Weitere Vorteile und Ausgestaltungen der Erfindung sind in den Unteransprüchen beschrieben und ergeben sich aus der Beschreibung und den beiliegenden Zeichnungen. Alle erläuterten Vorteile sind nicht nur in den jeweils angegebenen Kombinationen, sondern auch in anderen Kombinationen oder Alleinstellung verwendbar, ohne den Rahmen der Erfindung zu verlassen.

Eine Ausführung zeichnet sich beispielsweise durch ein hohes Druckverhältnisse aus, um das Temperaturniveau bei der Abzweigung zu reduzieren. Ein Druckverhältnis von 20 oder mehr, insbesondere von grösser 30 ist vorteilhaft, um eine ungekühlte Abzweigung mit kostengünstigen Materialen zu realisieren. Bei Gasturbinen mit sequentieller Verbrennung kann das Druckverhältnis beispielsweise noch weiter erhöht werden, damit auch über die zweite Turbine noch ein ausreichend hohes Druckverhältnis zur Reduktion des Temperaturniveaus bei der Abzweigung zu realisieren.

Entsprechend dem hohen Druckverhältnis wird ausserdem ein Verdichter mit Zwischenkühlung vorgeschlagen.

Weiter ist eine Brenngasvorwärmung mit Niedertemperaturwärme des Kraftwerkes eine Möglichkeit den Gesamtwirkungsgrad der Anlage zu erhöhen. Analog kann Niedertemperaturwärme nutzbringend auch zur Regeneration des CO2 Absorptions- oder Adsorptionsmittels verwendet werden. Neben bekannten Quellen aus den verschieden Dampfkreisläufen der Anlage kann hierfür auch Wärme aus Kühlluftkühlern der Gasturbine verwendet werden.

Weiter kann die Gasturbine mit geschlossener oder offener Dampfkühlung der Brennkammer und/ oder der Turbine vorgesehen werden. Die über die geschlossene Dampfkühlung abgeführte Wärme kann in den Dampfkreisläufen zur Erzeugung elektrischer Energie über die Dampfturbinen und/ oder als Prozesswärme verwendet werden. Die Kühlsysteme sind dafür geschlossene oder zumindest teilgeschlossene Kreisläufe.

### Kurze Beschreibung der Zeichnungen

Die Erfindung ist anhand von Ausführungsbeispielen in den Fig. 1 bis 10 schematisch dargestellt.

Es zeigen:
Fig. 1 ein CCPP mit dampfgekühltem Strömungsteiler in einer EinwellenGasturbine, Rezirkulation eines Abgasteilstroms und Abzweigung eines zweiten Abgasteilstroms für Backend Capture mit optimierter Dampferzeugung,
Fig. 2 ein CCPP mit Strömungsteiler in einer Einwellen- Gasturbine, Rezirkulation eines Abgasteilstroms und Abzweigung eines zweiten Abgasteilstroms für Backend Capture mit zur Nachexpansion der Abgase optimierter Wiedererhitzung,
Fig. 3 ein CCPP mit Strömungsteiler in einer Zweiwellen- Gasturbine, Rezirkulation eines Abgasteilstroms und Abzweigung eines zweiten Abgasteilstroms für Backend Capture mit optimierter Dampferzeugung,
Fig. 4 ein CCPP mit Strömungsteilung nach einer Kernturbine, Rezirkulation eines Abgasteilstroms und Abzweigung eines zweiten Abgasteilstroms für Backend Capture sowie Nachexpansion der rezirkulierten Gase und der Abgase in einer separaten Turbine,
Fig. 5 ein CCPP mit Strömungsteiler in einer Einwellen- Gasturbine, Rezirkulation eines Abgasteilstroms und Abzweigung eines zweiten Abgasteilstroms für kryogenes Backend Capture durch Kühlung und Expansion der Abgase in einer Dralldüse,
Fig. 6 einen Schnitt durch eine Turbine mit Strömungsteiler zwischen der letzten und der vorletzten Turbinenstufe,
Fig. 7 einen Schnitt durch eine Turbine mit Strömungsteiler vor der vorletzten Turbinenstufe,
Fig. 8 einen Schnitt durch eine Turbine mit Strömungsteiler vor der letzten Turbinenstufe und Dampfkühlung der Leitschaufelträger im Bereich des Entnahmestroms.
Fig. 9 einen Schnitt durch eine Turbine mit Strömungsteiler und Verstellring zur Regelung des Entnahmestroms.
Fig. 10 eine Einwellenanordnung mit je einer Niederdruckturbine zur Rezirkulation und einer Luftturbine zur Entspannung der CO2 armen Abgase,
Fig. 11 ein CCPP mit dampfgekühltem Strömungsteiler in einer EinwellenGasturbine, Rezirkulation eines Abgasteilstroms, Abzweigung eines zweiten Abgasteilstroms für Backend Capture und Rekuperator.

### Ausführung der Erfindung

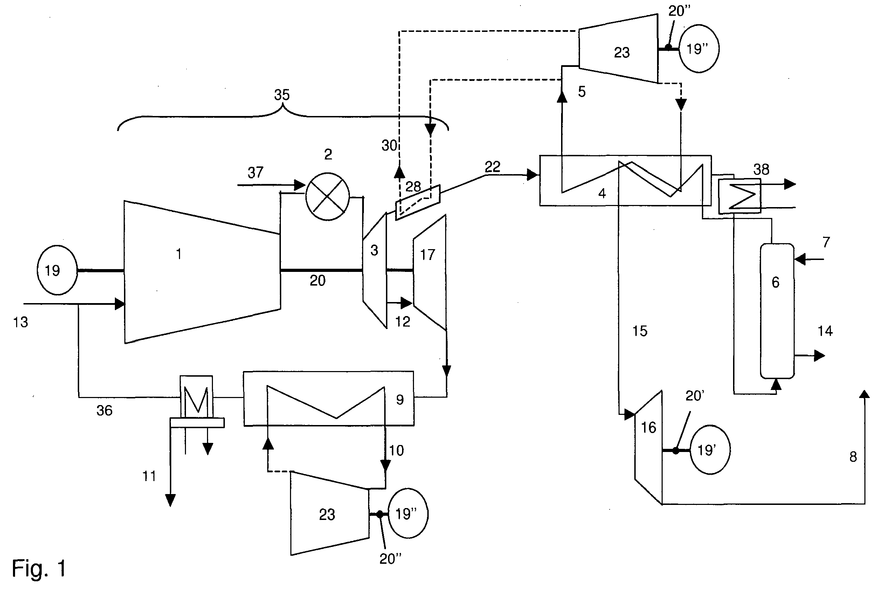

Fig. 1 zeigt ein CCPP zur Durchführung des erfindungsgemässen Verfahrens. Es besteht aus einer Gasturbinenanlage, die auf an sich bekannte Weise einen Verdichter 1, eine Brennkammer 2, eine Turbine, sowie einen Generator 19 umfasst. Typischerweise ist der Generator 19 am kalten Ende der Gasturbine 35, dass heisst am Verdichter 1 angekuppelt. Die Turbine ist in eine Hochdruckturbine 3 und Niederdruckturbine 17 aufgeteilt. Die Turbine treibt über eine Welle 20 den Verdichter 1 und den Generator 19 an.

Der Brennstoff 37, Gas oder Oil, wird in der Brennkammer 2 mit im Verdichter 1 komprimierten Gasen vermischt und verbrannt. Die Heissgase werden unter Arbeitsabgabe in der mindestens einen nachfolgenden Turbine entspannt. Erfindungsgemäss wird ein erster Teil der Heissgase als Entnahmestrom 22 nach der Hochdruckturbine 3 abgezweigt und ein zweiter Teil wird in der Niederdruckturbine 17 unter Leistungsabgabe entspannt und nach Abgabe der nutzbaren Wärme und Rückkühlung rezirkuliert.

Zur Rückführung des rückgekühlten Rezirkulationsstroms 36 und Vermischung des rückgekühlten Rezirkulationsstroms 36 mit der Ansaugluft 13, umfasst dass CCPP eine Rückführungsleitung, einen HRSG 9 und einen Kühler mit Kondensatabscheider 11. Der Frischdampf 10 des HRSGs 9 wird zur Leistungsabgabe an eine Dampfturbine 23 oder nutzbringend für Kraft-Wärmekopplung, auch Cogeneration genannt, eingesetzt. Die Dampfturbine 23 treibt in dem gezeigten Beispiel über eine Welle 20" einen Generator 19" an. Der HRSG 9 mit Dampfkreislauf ist stark vereinfacht dargestellt. Kondensator, Speisewasserpumpen und bekannte Komponenten des Dampfkreislaufes sind zur Vereinfachung nicht dargestellt. Typischerweise wird der Dampfkreislauf als Mehrdruckkreislauf durchgeführt.

Der abgezweigte zweite Teilstrom wird als Entnahmestrom 22 in einem HRSG/ Wärmetauscher 4 gekühlt und dann durch einen CO2 Absorber 6 geleitet. Typischerweise ist nach dem HRSG/ Wärmetauscher 4 noch ein Kühler 38 angeordnet, der den Entnahmestrom 22 auf ein, für eine effektive Absorption geeignetes, Temperaturniveau kühlt. Anschliessend werden die CO2 armen Abgase in dem HRSG/ Wärmetauscher 4 wieder erwärmt und die CO2 armen Druckabgase 15 unter Leistungsabgabe in der Luftturbine 16 entspannt, bevor sie als CO2-armes Abgas 8 an die Umgebung abgegeben werden. Die Luftturbine 16 treibt über eine Welle 20' einen Generator 19' an.

Die in dem Kühler 38 abgeführte Niedertemperaturwärme kann beispielsweise zur Speisewasservorwärmung in einem der Dampfprozesse und/ oder zur Vorwärmung des Brenngases 37 verwendet werden.

Bei der Kühlung des Entnahmestroms 22 in dem HRSG/ Wärmetauscher 4 wird Dampf erzeugt, der in einer Dampfturbine 23 eines Dampfkreislaufes Leistung abgibt. In diesem Beispiel wird die Leistung über eine Welle 20" an einen Generator 19" übertragen. Dieser Dampf oder ein weiterer Dampfstrom wird in einem dampfgekühlten Diffusor 28 und oder Leitungen durch die der Entnahmestrom 22 aus der Turbine abgezweigt wird, überhitzt. Weitere Komponenten des Dampfkreislaufs, wie Hilfssysteme, Kondensator und Speisewasserpumpen sind zur Vereinfachung hier und in den folgenden Bildern nicht dargestellt.

Der HRSG/ Wärmetauscher 4 kann als eine beide Funktionen integrierende Komponente gefertigt sein oder aus zwei in Reihe angeordneten Komponenten bestehen. Der in Fig. 1 gezeigte HRSG/ Wärmetauscher 4 ist auf eine hohe Dampfproduktion und hohe Dampftemperatur ausgelegt. Der Wärmetauscherteil, der die CO2- armen Druckabgase zur Entspannung 15 wieder erwärmt, ist auf den kühleren, stromab gelegenen Teil des HRSG/ Wärmetauscher 4 beschränkt. Mehr als 50% der nutzbaren Abwärme wird in diesem Beispiel zur Dampfproduktion ausgekoppelt.

Prinzipiell können verschiedene Techniken zur CO2 Abscheidung, wie Druckwechselabsorption, chemische Absorption, Adsorption oder Membran-Abscheidung angewandt werden. Die Regeneration eines mit CO2 gesättigten Absorptionsmittels 14, durch die dem CO2 Absorber 6 eine CO2 Absorptionsflüssigkeit 7 zur Verfügung gestellt wird, ist an sich ebenfalls bekannt und hier nicht dargestellt.

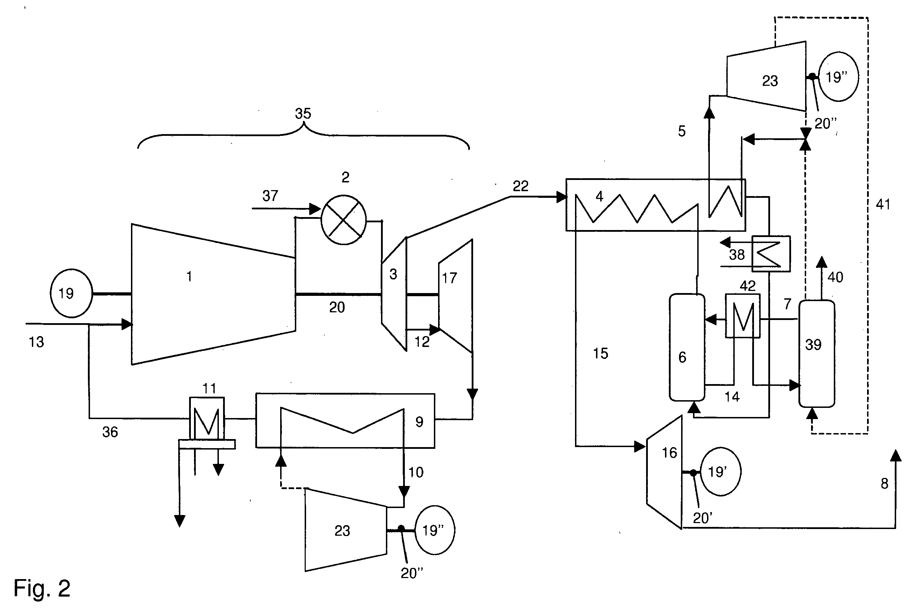

Fig. 2 zeigt ebenfalls ein CCPP mit Strömungsteilung in einer EinwellenGasturbine, Rezirkulation eines Abgasteilstroms und Backend Capture aus einem zweiten Abgasteilstrom. Dieses CCPP ist für eine Wiedererhitzung zur Nachexpansion der Abgase optimiert. Erfindungsgemäss wird auch hier ein erster Teil der Heissgase als Entnahmestrom 22 nach der Hochdruckturbine 3 abgezweigt und ein zweiter Teil wird in der Niederdruckturbine 17 unter Leistungsabgabe entspannt und nach Wärmeabgabe und Kühlung rezirkuliert.

Im Gegensatz zu Fig. 1 ist hier auf eine Dampfkühlung des Diffusors und der Leitungen, die den Entnahmestrom 22 zu dem HRSG/ Wärmetauscher 4 führen, verzichtet.

Weiter ist der HRSG/ Wärmetauscher 4 auf eine grosse Wärmetauscherleistung ausgelegt und es wird nur eine kleine Menge Frischdampf oder Heissdampf zur Dampfturbine/ Cogeneration 5 erzeugt. Mehr als 50% der Wärme wird in diesem Beispiel zur Wiedererwärmung der CO2- armen Abgase genutzt.

Zusätzlich ist in Fig. 2 noch eine Desorptionskolone 39 gezeigt in der das CO2 gesättigtes Absorptionsmittel 14 regeneriert wird und die den CO2 Absorber 6 mit CO2 Absorptionsflüssigkeit 7 versorgt. Zur Regeneration wird das CO2 gesättigte Absorptionsmittel 7 in einem Wärmetauscher 42 durch regeneriertes Absorptionsmittel 7 vorgewärmt. Weiter wird die Desorptionskolone 39 mit Dampf 41 als Wärmequelle zur Resorption versorgt. Dieser wird beispielsweise von der Dampfturbine 23 abgezweigt wird. Weiter kann Restwärme aus dem CO2 armen Abgas 8 oder andere Niedertemperaturwärme des Prozesses genutzt werden.

Vorteilhaft bei dieser Anordnung und Prozessführung ist, dass die Resorption unter Druck erfolgt und damit CO2 40 unter Überdruck aus der Resorptionskolonne 39 austritt. Das Druckverhältnis, mit dem das CO2 zum weiteren Transport oder Lagerung verdichtet werden muss ist entsprechend kleiner und die benötigte Verdichtungsarbeit wird reduziert.

Die Abgastemperatur nach der Luftturbine 16 kann bei dieser Ausführung so hoch sein, dass ein weiterer HRSG 9 die verbleibende Restwärme der CO2- armen Abgase 8 weiter zur Dampferzeugung nutzen kann (in diesem Beispiel nicht gezeigt).

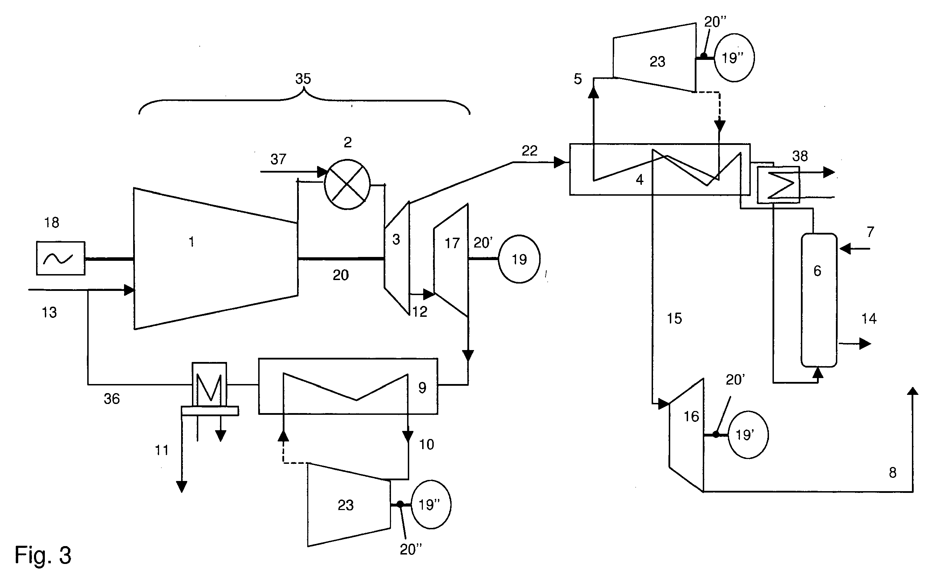

In Fig. 3 ist ein CCPP mit Strömungsteilung in einer Zweiwellen- Gasturbine, Rezirkulation eines Abgasteilstroms, und Backend Capture aus einem zweiten Abgasteilstrom gezeigt. Die Prozessführung mit Strömungsteilung, Rezirkulation eines Abgasteilstroms und Backend Capture, optimierter Wiedererhitzung zur Nachexpansion eines zweiten Abgasteilstroms entspricht der von Fig. 1. Die Gasturbine ist hier aber keine Einwellenmaschine, sondern eine Zweiwellenmaschine. Die Hochdruckturbine 3 ist gemeinsam mit dem Verdichter 1 auf einer Welle 20 angeordnet. Sie treibt nur den Verdichter 1 an und bildet zusammen mit ihm und der Brennkammer 2 einen sogenannten Gaserzeuger oder die Kernturbine. Erfindungsgemäss wird auch hier ein erster Teil der Heissgase als Entnahmestrom 22 nach der Hochdruckturbine 3 abgezweigt und ein zweiter Teil wird in der Niederdruckturbine 17 unter Leistungsabgabe entspannt und nach Wärmeabgabe und Kühlung rezirkuliert. Die Niederdruckturbine 17 ist als Leistungsturbine auf einer separaten Welle 20' angeordnet und treibt den Generator 19 an, der direkt an sie angekoppelt ist.

Diese Anordnung ist besonders für Anlagen geeignet, die für sogenannte Aeroderivatives oder Mehrwellengasturbinen basieren. Die notwendigen Designänderungen an der Kernturbine können so minimiert werden. Die Hauptänderung ist eine neue Niederdruckturbine 17 die für den um den Entnahmestrom 22 reduzierten Teilmassenstrom aus zu legen ist, die Entnahmeleitung und eventuelle Anpassungen an der mindestens einen Brennkammer 2.

Zum Start der Gasturbine ist in dieser Anordnung ein separater Motor 18 als Startvorrichtung vorgesehen, der wie dargestellt direkt mit der Welle 20 verbunden ist. Beispielsweise kann er aber auch über eine Überholkupplung mit der Welle 20 verbunden sein.

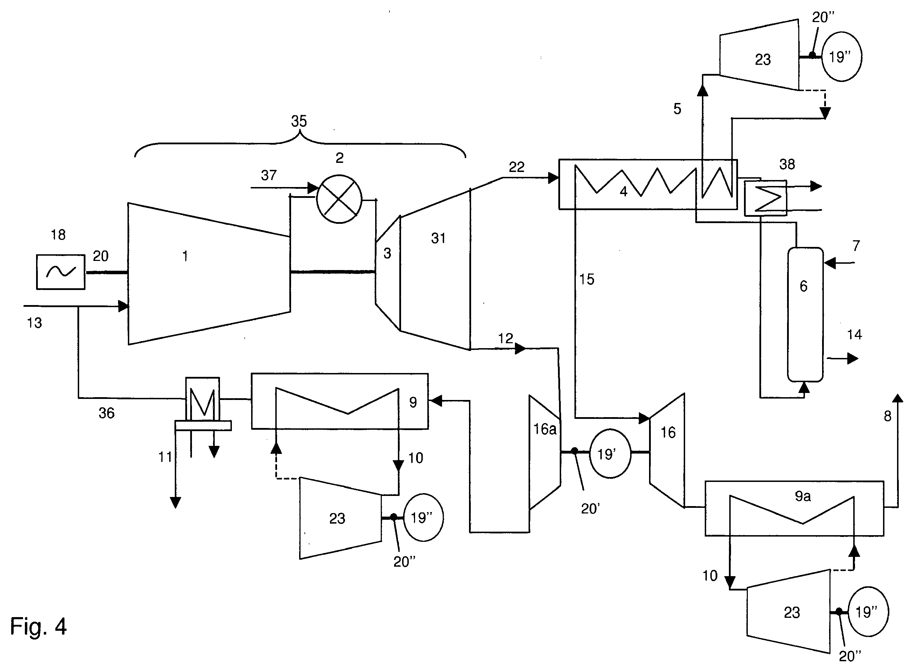

Fig. 4 zeigt ein CCPP in dem der Gaserzeuger von den Nutzturbinen getrennt angeordnet ist. Die kinetische Energie der aus dem Gaserzeuger austretenden Gase wird bei dieser Anordnung mit kleinen Verlusten in dem Diffusor 31 in Druck umgewandelt. Nach diesem Diffuser können die Heissgase geteilt werden und von entsprechenden Abzweigungen dem Backend Capture, sowie zur Nachexpansion der zu rezirkulierenden Gase einer Luftturbine 16a zugeführt werden. Die nach dem Backend Capture CO2 armen Druck-Abgase 15 werden einer Luftturbine 16 zugeführt werden.

In dem gezeigten Beispiel sind die Luftturbine 16 zur Expansion der zu rezirkulierenden Heissgase und die Luftturbine 16a zur Expansion der, in dem HRSG/ Wärmetauscher 4 wiedererwärmten, CO2- armen Druck- Abgase 15 auf einer gemeinsamen Welle 20' angeordnet. Sie treiben beide einen Generator 19' zur Stromerzeugung an. Luftturbinen 16, 16a mit je einem Generator 19' auf separaten Wellensträngen sind ebenfalls denkbar.

Dampf wird in dem HRSG/ Wärmetauscher 4, der die Abwärme des Entnahmestroms 22 nutzt, in dem HRSG 9, der die Abwärme des Rezirkulationsstroms 12 nutzt, und in dem HRSG 9a, der die Abwärme der CO2-armen Abgase 8 nutzt, erzeugt. Weiter ist eine Dampfkühlung des Diffusors 31 sowie der Heissgasleitungen zu dem HRSG/ Wärmetauscher 4 und zu der Luftturbine 16a denkbar (nicht gezeigt). Mit dieser Dampfkühlung kann Dampf nutzbringend weiter überhitzt werden.

Da die Gasturbine in dieser Anordnung nicht über den Generator 19' gestartet werden kann, ist ein separater Motor 18 als Startvorrichtung vorgesehen.

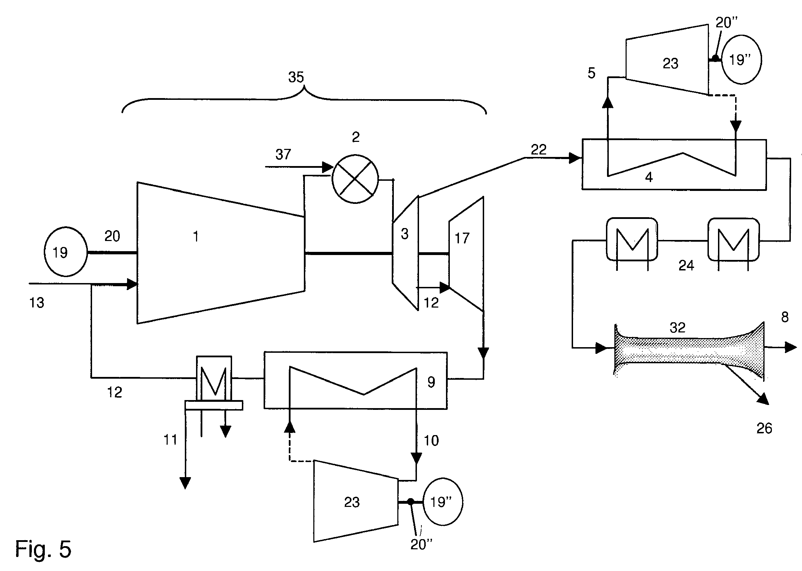

Fig. 5 zeigt ein CCPP mit Strömungsteilung in einer Einwellen- Gasturbine, Rezirkulation eines Abgasteilstroms, und kryogenem Backend Capture aus einem zweiten Abgasteilstrom durch Kühlung und Expansion der Abgase in einer Dralldüse,

Die in Fig. 5 gezeigt Anlage hat eine bezüglich Gasturbine und Behandlung der Rezirkulationsgase eine Fig. 1 entsprechende Anordnung. Ein erster Teil der Heissgase wird als Entnahmestrom 22 nach der Hochdruckturbine 3 abgezweigt und ein zweiter Teil wird in der Niederdruckturbine 17 unter Leistungsabgabe entspannt und nach Wärmeabgabe und Kühlung rezirkuliert.

Gegenüber der in Fig. 1 gezeigten Anordnung zeichnet sich die in Fig. 5 gezeigte Anordnung durch eine kryogene Backend Capture mit Kühlung und Expansion der Abgase in einer Dralldüse 32 aus. Dazu gibt der Entnahmestrom 22 in dem HRSG/ Wärmetauscher 4 seine nutzbare Wärme ab und wird anschliessend in kryogenen Vorkühlern 24 weiter abgekühlt. In diesen wird Kondensat abgeschieden und/ oder ist ein periodischer Enteisungsprozess vorzusehen.

Die kalten Abgase werden unter Druck einer Dralldüse 32 zugeführt. In dieser wird das Gas stark beschleunigt und dadurch weiter abgekühlt. Bei ausreichender Vorkühlung sinkt die Temperatur unter die Sublimationstemperatur von CO2 und das CO2 fällt aus. Aufgrund des starken Dralls in der Dralldüse wird das CO2 durch Zentrifugalkräfte an den Aussenwänden der Düse konzentriert und von dort abgeschieden. Das abgeschiedene CO2 26 wird als Teilstrom von der Dralldüse 32 zur weiteren Behandlung abgeleitet. Das CO2- arme Abgas 8 strömt aus dem, zur Druckrückgewinnung typischerweise als Diffusor ausgebildeten Austritt der Dralldüse aus.

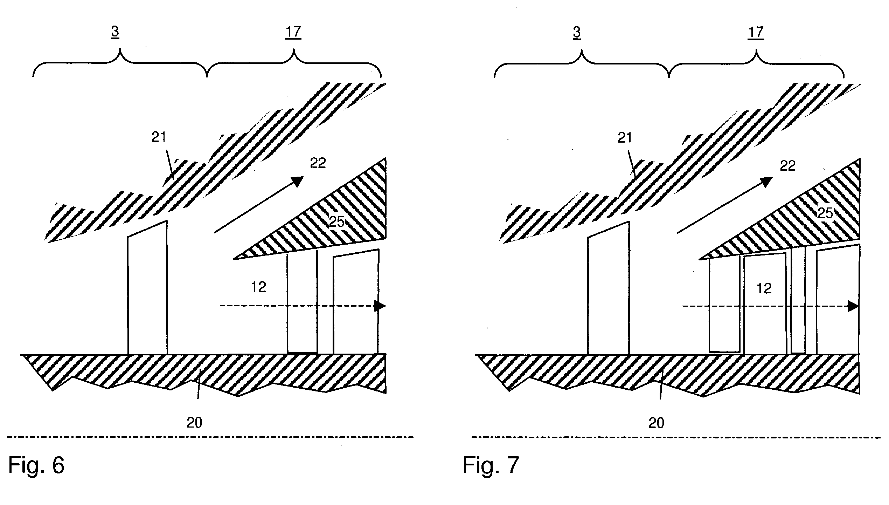

Fig. 6 zeigt ein Ausführungsbeispiel für eine Strömungsteilung vor der letzen Turbinenstufe. Hochdruckturbine 3 und Niederdruckturbine 17 sind auf einer gemeinsamen Welle 20. Durch die Niederdruckturbine 17, die nur aus einem Leitschaufel- Laufschaufelpaar besteht, strömt der Rezuirkulationsstrom12. Die Hochdruckturbine 3 ist nur durch eine Laufschaufel angedeutet. Stromab der Hochdruckturbine 3 weitet sich der Leitschaufelträger 21 auf. Zwischen Leitschaufelträger 21 und dem Strömungsteiler 25 ist eine ringförmige Öffnung, durch die der Entnahmestrom 22 abgezweigt wird. In dem gezeigten Beispiel weitet sich der effektive Strömungsquerschnitt durch eine Vergrösserung des Radius in Strömungsrichtung des Entnahmestroms 22 auf, so dass ein Druckrückgewinn erreicht wird. Der Strömungsteiler 25 ist in dem Beispiel ein Teil des Leitschaufelträgers 21 der Niederdruckturbine 17.

Fig. 7 zeigt einen zur Fig. 6 analogen Schnitt durch eine Turbine mit Strömungsteiler 25 vor der vorletzten Turbinenstufe. Die Niederdruckturbine 17, besteht in diesem Beispiel aus zwei Leitschaufel- Laufschaufelpaaren. Die Hochdruckturbine 3 ist nur durch eine Laufschaufel angedeutet

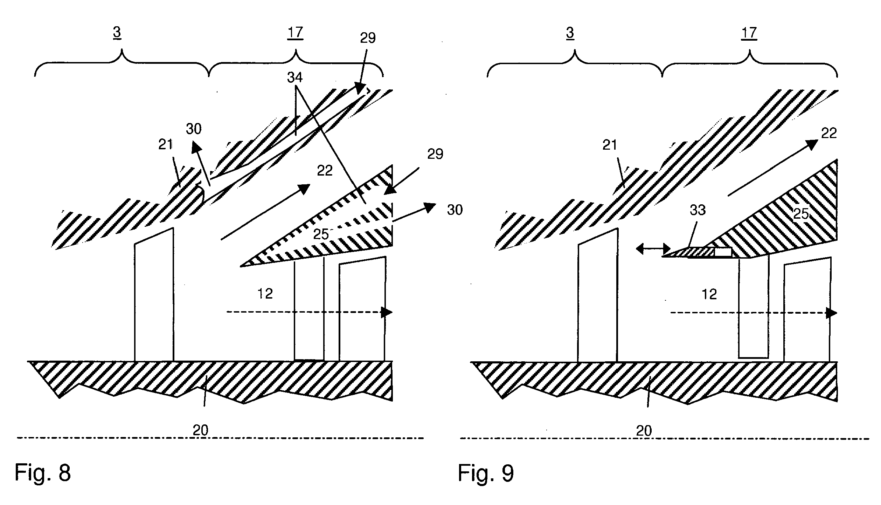

Fig. 8 zeigt einen zur Fig. 6 analogen Schnitt durch eine Turbine mit Strömungsteilung vor der letzten Turbinenstufe. Die Temperatur der Heissgase im Bereich der Strömungsteilung kann je nach Gasturbinenbauart, Ort der Strömungsteilung und Turbineneintrittstemperatur sehr hoch sein und bis in die Grössenordnung von 1000°C reichen. In der Regel wird sie im Bereich von 600°C bis 900°C liegen. Materialen, die dieser Temperatur dauerhaft standhalten sind sehr teuer und eine Luftkühlung aufgrund den grossen zu kühlenden Flächen und der damit verbundenen Verluste meistens nicht praktikabel. Um trotzdem günstigere Materialen für die Leitschaufelträger 21 und Strömungsteiler 25 verwenden zu können, sind der Leitschaufelträger 21 und der 25 dampfgekühlt. In dem gezeigten Beispiel sind im wesentlichen konzentrische, parallel zur Oberfläche der Schaufelträger verlaufende Kühlkavitäten 34 vorgesehen. Sie werden mit Kühlungsdampf 29 versorgt der als überhitzter Dampf 30 nach durchströmen der Kühlkavität 34 abgeführt wird und dem Wasserdampfkreislauf zugeführt wird. Der Dampf wird dabei entgegen der Heissgasströmung durch die Kühlkavität 34 geführt, um eine möglichst hohe Dampftemperatur erreichen zu können.

Je nach Betriebspunkt der Gasturbine kann ein anderes Rezirkulationsverhältnis, dass heisst Verhältnis von Rezirkulationsstrom 12 zu Gesamtmassenstrom durch die Turbine vorteilhaft sein. Eine Möglichkeit das Rezirkulationsverhältnis zu regeln, ist in Fig. 9 gezeigt. In diesem Beispiel ist eine in der stromauf gelegenen Kante des Strömungsteilers 25 ein Verstellring 33 zur Regelung des Rezirkulationsverhältnisses angeordnet. Durch axiale Verschiebung des Verstellrings 33 ist der dem Entnahmestrom 22 zur Verfügung stehende Strömungsquerschnitt und damit der Entnahmestrom 22 regelbar. Für eine Verkleinerung des Entnahmestroms 22 wird der Verstellring 34 entgegen der Strömungsrichtung der Heissgase ausgefahren und damit das Rezirkulationsverhältnis erhöht. Für eine maximale Entnahme wird der Verstellring 33 so weit wie möglich in dem Strömungsteiler 25, zurückgefahren und damit das Rezirkulationsverhältnis verkleinert.

In weiteren Ausführungen wird nicht ein Verstellring 33 verschoben, sondern Ringsegmente. Weiter ist eine Regelung über winkelverstellbare Ringsegmente denkbar. Dazu wird der Winkel zwischen der Hauptströmungsrichtung des Rezirkulationsstroms 12 und dem Ringelement verstellt, wobei das Ringelement, oder genauer die dem Rezirkulationsstrom 12 zugewandte Oberfläche des Ringelements im Auslegungsfall typischerweise parallel zur Hauptströmungsrichtung orientiert ist.

Anstelle oder zur Ergänzung einer Regelung durch verstellbare Geometrie des Strömungsteilers kann beispielsweise eine Luftturbine 16, 16a mit einem regelbaren Eintrittsquerschnitt ausgeführt sein. Beispielsweise wird die Eintrittsleitschaufelreihe mit einer Verstellvorrichtung zur Regelung des Eintrittswinkels ausgeführt. Dies wird konstruktiv einfacher als bei herkömmlichen Gasturbinen, da die Eintrittstemperatur in die Luftturbinen 16, 16a typischerweise tief genug ist, um eine ungekühlte Turbine zu realisieren und daher keine Dichtungsprobleme an den Verbindungsstellen für die Kühlluftzuführung der variablen Leitschaufeln auftreten.

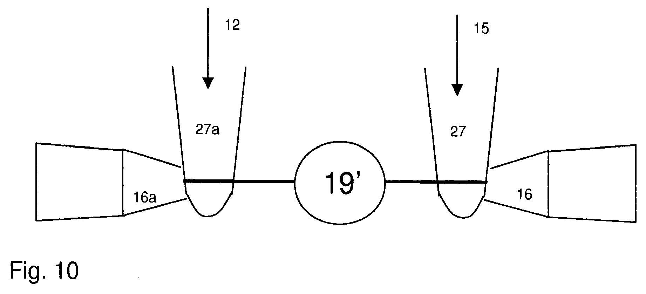

In Fig. 10 ist eine zu einem Generator 19' symmetrische Einwellenanordnung der Luftturbine 16, in der die CO2 armen Druck-Abgase 15 entspannt werden und der Luftturbine 16a, in der der Rezirkulationsstrom entspannt wird, gezeigt. Die Beiden Luftströme werden jeweils über ein Turbineneinlassgehäuse 27, 27a in die Luftturbinen 16, 16a eingeleitet. Durch die symmetrische Anordnung auf einer Welle 20' kann der Axialschub der beiden Luftturbinen 16, 16a leichter kompensiert werden.

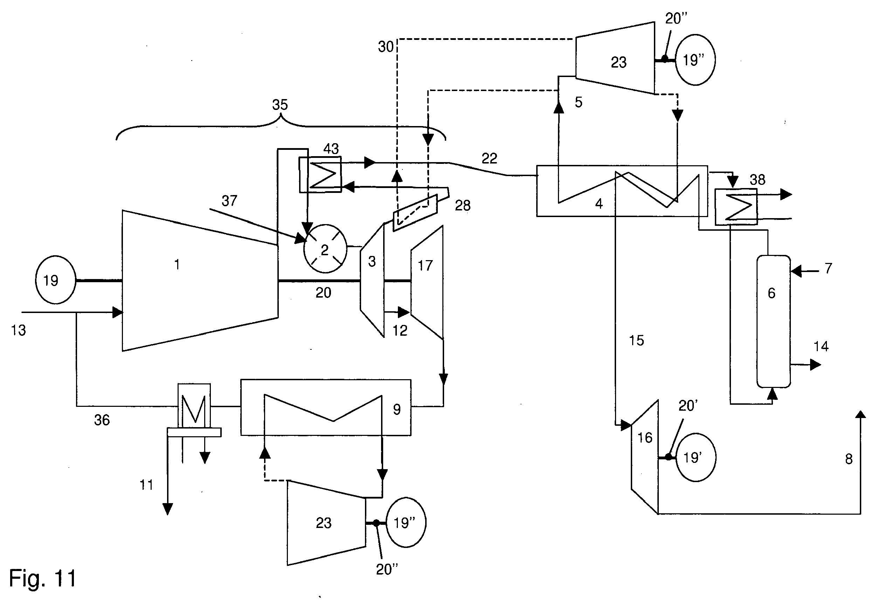

Fig. 11 zeigt eine Variante eines CCPP mit Rekuperator 43. Die in diesem Beispiel genannte Variante basiert auf Fig. 1 und zeigt als zusätzliche Vorrichtung einen Rekuperator 43 mit dem die Verdichteraustrittsluft vor Eintritt in die Brennkammer 2 vorgewärmt wird. Im Rekuperator 43 gibt der Entnahmestrom 22 einen Teil seiner nutzbaren Wärme an die Verdichteraustrittsluft ab, so dass der Brennstoffmassenstrom 37 bei konstanter Turbineneintrittstemperatur reduziert werden kann. Die Restwärme des Entnahmestroms 22 wird analog zu dem Beispiel aus Fig. 1 genutzt.

Abhängig von der Verdichteraustrittstemperatur und der Austrittstemperatur der Niederdruckturbine 17 kann eine rekuperative Wärmerückgewinnung eines Teils der Wärme des Rezirkulationsstroms in die Verdichteraustrittsluft vorteilhaft sein.

Bei einer modernen Gasturbinen mit hohem Druckverhältnis ist die Verdichteraustrittstemperatur allerdings oft so hoch, das die Temperatur des Rezirkulationsstroms nach Austritt aus der Niederdruckturbine 17 nicht oder nicht signifikant höher ist und eine Rekuperation keine Vorteile bringt. Für diese Fälle ist eine Rekuperation, so wie sie in Fig. 11 gezeigt ist, aufgrund der höheren Temperatur des Entnahmestroms 22 vorteilhaft.

In einer weiteren Ausführung ist eine Reihenschaltung vorgeschlagen, bei der zunächst die Wärme aus dem Rezirkulationsstroms nach Austritt aus der Niederdruckturbine 17 in die Verdichteraustrittsluft rekuperiert wird und dann Wärme aus dem Entnahmestrom 22 in die Verdichteraustrittsluft rekuperiert wird.

Die in den Fig. 1 bis 5 gezeigten Dampfprozesse sind stark vereinfacht mit separaten Dampfturbinen 23 dargestellt. Der Dampf kann auch zusammengeführt sein und für eine oder mehreren Dampfturbinen mit verschiedenen Frischdampfzuständen verwendet werden. Die mindestens eine Dampfturbine 23 kann dabei über eine separate Welle 20" einen separaten Generator 19" antreiben. Sie kann aber beispielsweise auch als Einwellenanordnung ausgeführt sein und über die Welle 20 einen mit der Gasturbine 35 gemeinsamen Generator 19 antreiben.

Die mindestens eine Luftturbine 16, 16a kann ebenfalls über eine separate Welle 20" einen separaten Generator 19" antreiben. Sie kann aber beispielsweise auch als auf einer Welle mit der Gasturbine 35 und/ oder auf einer Welle mit mindestens einer Dampfturbine 23 angeordnet sein.

Typische Temperaturen des CO2- armen Abgasstroms 8 sind im Bereich der Umgebungstemperatur bis etwa 120°C. Die Untergrenze ist vor allem von der Abgaszusammensetzung, die noch durch eventuelle Filter und Katalysatoren verbessert sein kann, dem Material der Abgasleitungen und des Schornsteins sowie lokalen Bestimmungen abhängig.

Die Temperatur des rückgekühlten Rezirkulationsstroms 36 ist typischerweise im Bereich von 0°C bis 50°C. Bei Luft- Luft Kühlern ist sie in der Regel 10°C bis 20°C über der Temperatur der Umgebungsluft. Zur Optimierung des Wirkungsgrades für den Betrieb bei von den Auslegungsbedingung abweichenden Randbedingungen kann eine Regelung der Temperatur des rückgekühlten Rezirkulationsstroms 36 vorteilhaft sein. Beispielsweise kann durch eine lastabhängige Temperaturregelung der Wirkungsgrad optimiert werden. Insbesondere bei Teillast kann durch eine Erhöhung der Verdichtereintrittstemperatur der Gesamtwirkungsgrad des Kombi- Kraftwerkes verbessert werden.

Die Temperatur des Entnahmestroms 22 ist für den Auslegungsfall bei Eintritt in den HRSG/ Wärmetauscher 4 typischerweise im Bereich von 550°C bis 750°C. Beispielsweise ist sie im Bereich von 600°c bis 700°C.

### Bezugszeichenliste

- 1: Verdichter
- 2: Brennkammer
- 3: Hochdruckturbine
- 4: HRSG/ Wärmetauscher
- 5: Frischdampf oder Heissdampf zur Dampfturbine / Cogeneration
- 6: CO2 Absorber
- 7: CO2 Absorptionsflüssigkeit
- 8: CO2-armes Abgas
- 9: HRSG (Abwärmekessel)
- 10: Frischdampf zur Dampfturbine / Cogeneration
- 11: Kühler mit Kondensatabscheider
- 12: Rezirkulationsstrom
- 13: Ansaugluft
- 14: CO2 gesättigtes Absorptionsmittel Regenerierung
- 15: CO2 arme Druck-Abgase zur Entspannung
- 16: Luftturbine
- 17: Niederdruckturbine
- 18: Motor
- 19: Generator (19', 19")
- 20: Welle (20', 20")
- 21: Leitschaufelträger
- 22: Entnahmestrom
- 23: Dampfturbine
- 24: Kryogener Vorkühler
- 25: Strömungsteiler
- 26: Abgeschiedenes CO2
- 27: Turbineneinlassgehäuse
- 28: Dampfgekühlter Diffusor/ Leitungen
- 29: Kühlungsdampf
- 30: Überhitzter Dampf
- 31: Diffusor
- 32: Dralldüse
- 33: Verstellring
- 34: Kühlkavität
- 35: Gasturbine
- 36: Rückgekühlter Rezirkulationsstrom
- 37: Brennstoff
- 38: Kühler
- 39: Desorptionskolonne
- 40: CO2
- 41: Dampf zur Desorption
- 42: Wärmetauscher
- 43: Rekuperator
- 44: CO2

## Patentansprüche

1. Verfahren zur CO2 Abscheidung aus einem Kombi-Kraftwerk, **dadurch gekennzeichnet, dass** der Gasstrom, der in einer Gasturbine (35) entspannt wird nach einer Hochdruckturbine (3) in einen ersten Teilmassenstrom und einen zweiten Teilmassenstrom aufgeteilt wird, der erste Teilmassenstrom unter Verrichtung von Expansionsarbeit weiter entspannt wird, seine Abwärme nutzbar abgeleitet wird und dieser erste Teilmassenstrom in den Ansaugstrom der Gasturbine (35) rezirkuliert wird sowie dass der zweite Teilmassenstrom als Entnahmestrom (22) abgezweigt wird, gekühlt wird und CO2 von ihm abgeschieden wird.

2. Verfahren nach Anspruch 1, **dadurch gekennzeichnet, dass** der Entnahmestrom (22) in einem HRSG/ Wärmetauscher (4) gekühlt wird, das CO2 in einem CO2 Absorber (6) abgeschieden wird und der Entnahmestrom (22) anschliessend in einer Luftturbine (16) entspannt wird.

3. Verfahren nach Anspruch 2, **dadurch gekennzeichnet, dass** der Entnahmestrom (22) vor der Expansion in der Luftturbine(16) in dem HRSG/ Wärmetauscher (4) wieder erwärmt wird.

4. Verfahren nach einem der Ansprüche 1 oder 2, **dadurch gekennzeichnet, dass** der Entnahmestrom (22) in einem kryogenen Vorkühler (24) weiter abgekühlt wird, in einer Dralldüse beschleunigt wird und CO2 kryogen in der Dralldüse abgeschieden wird.

5. Verfahren nach einem der Ansprüche 1 bis 4, **dadurch gekennzeichnet, dass** der erste Teilmassenstrom in einer Niederdruckturbine (17) entspannt wird, wobei die Niederdruckturbine (17) Teil einer Einwellengasturbine ist oder als Leistungsturbine Teil einer Mehrwellengasturbine ist.

6. Verfahren nach einem der Ansprüche 1 bis 5, **dadurch gekennzeichnet, dass** der erste Teilmassenstrom in einer separaten Luftturbine (16a) entspannt wird.

7. Verfahren nach einem der Ansprüche 1 bis 6, **dadurch gekennzeichnet, dass** der Leitschaufelträger (21) der Turbine und/ oder ein Strömungsteiler (25) zum Aufteilen des Gasstromes im Bereich der Strömungsteilung und/ oder entlang des Entnahmestroms (22) und/ oder die für den Entnahmestrom vorgesehene Leitung zu einem HRSG/ Wärmetauscher (4) und/ oder die für den Rezirkulationsstrom vorgesehene Leitung zu einem HRSG (9) zumindest teilweise dampfgekühlt ist.

8. Verfahren nach einem der Ansprüche 1 bis 7, **dadurch gekennzeichnet, dass** der Anteil des Entnahmestroms (22) am Gesamtmassenstrom der Gasturbine durch eine variable Geometrie eines Strömungsteilers (25) regelbar ist.

9. Verfahren nach einem der Ansprüche 2 oder 3, **dadurch gekennzeichnet, dass** der Entnahmestrom (22) durch eine variable Leitschaufel der Luftturbine (16) regelbar ist.

10. Ein Kombi-Kraftwerk mit CO2 Abscheidung bestehend aus mindestens einer Gasturbine (35), die mindestens aus einen Verdichter (1), mindestens einer Brennkammer (2) und mindestens einer Turbine besteht, **dadurch gekennzeichnet, dass** die Turbine, die stromab einer letzten Brennkammer (2) der Gasturbine (35) angeordnet ist, nach einer Hochdruckturbine (3) eine Strömungsteilung zur Aufteilung der durch die Turbine strömenden Gase in einen Entnahmestrom (22) und einen Rezirkulationsstrom (12) in den Ansaugstrom des Verdichters aufweist, wobei der CO₂ Abscheider in der leitung für den Entnahmestrom (22) vorgeschen ist und **dadurch gekennzeichnet, dass** stromab der Hochdruckturbine (3) im Rezirkulationsstrom (12) eine Turbine (17, 16a) angeordnet ist..

11. Ein Kombi-Kraftwerk nach Anspruch 10, **dadurch gekennzeichnet, dass** stromab der Hochdruckturbine (3) eine Niederdruckturbine (17) angeordnet ist, wobei zwischen Hochdruckturbine (3) und der Niederdruckturbine (17) ein Strömungsteiler (25) zur Abzweigung eines Entnahmestroms (22) angeordnet ist.

12. Ein Kombi-Kraftwerk nach Anspruch 10 oder 11, **dadurch gekennzeichnet, dass** stromab der Hochdruckturbine (3) ein Diffusor (31) angeordnet ist, an den Diffusor mindestens zwei Austrittsleitungen anschliessen, wobei mindestens eine Austrittsleitung für den Entnahmestrom (22) und mindestens eine Austrittsleitung für den Rezirkulationsstrom (12) vorgesehen ist, wobei mindestens eine Austrittsleitung den Rezirkulationsstrom (12) zu einer Luftturbine (16a) führt.

13. Ein Kombi-Kraftwerk nach einem der Ansprüche 11 bis 12, **dadurch gekennzeichnet, dass** nach der Niederdruckturbine (17) oder Luftturbine (16a) ein HRSG (9) und ein Kühler (11) in einer Rezirkulationsleitung durch die der Rezirkulationsstrom (12) in den Verdichter (1) rezirkuliert wird, vorgesehen ist, sowie dass ein HRSG/ Wärmetauscher (4) in der Leitung für den Entnahmestrom (22) vorgesehen ist.

14. Ein Kombi-Kraftwerk nach Anspruch 10 bis 13, **dadurch gekennzeichnet, dass** stromab des CO2 Abscheiders eine Luftturbine (16) angeordnet ist.

15. Ein Kombi-Kraftwerk nach den Ansprüchen 11 und 14, **dadurch gekennzeichnet, dass** zwischen dem Strömungsteiler (25) und dem CO2 Abscheider sowie zwischen CO2 Abscheider und Luftturbine (16a) ein HRSG/ Wärmetauscher (4) zur Kühlung des Entnahmestroms (22) vor dem CO2 Abscheider und Wiedererhitzung der CO2 armen Druckabgase (15) vorgesehen ist.

16. Ein Kombi-Kraftwerk nach Anspruch 13, **dadurch gekennzeichnet, dass** nach dem HRSG/ Wärmetauscher (4) zur Nutzung der Abwärme des Entnahmestroms (22) ein kryogener Vorkühler (24) und eine Dralldüse (32) zur CO2 Abscheidung angeordnet ist.

17. Ein Kombi-Kraftwerk nach einem der Ansprüche 10 bis 16, **dadurch gekennzeichnet, dass** der Strömungsteiler (25) oder der Diffusor (31) und/ oder die Entnahmestellen und/oder Leitungen für den Entnahmestrom (22) und/ oder für den Rezirkulationsstrom (12) zumindest teilweise eine Dampfkühlung aufweisen.

18. Ein Kombi-Kraftwerk nach Anspruch 11 oder nach einem der Ansprüche 12 bis 17 wenn nach Anspruch 11, **dadurch gekennzeichnet, dass** der Strömungsteiler eine verstellbare Geometrie zur Regelung des Rezirkulationsverhältnisses aufweist.

19. Ein Kombi-Kraftwerk nach einem der Ansprüche 10 bis 12, **dadurch gekennzeichnet, dass** die Luftturbine (16a) mindestens eine verstellbare Leitschaufelreihe aufweist.

20. Ein Kombi-Kraftwerk nach Anspruch 14, **dadurch gekennzeichnet, dass** die Luftturbine (16a) zur Expansion des Rezirkulationsstroms (12) und die Luftturbine (16) zur Expansion der CO2 armen Druckabgase (15) auf einer Welle angeordnet sind.

21. Ein Kombi-Kraftwerk nach einem der Ansprüche 10 bis 20, **dadurch gekennzeichnet, dass** die Verdichteraustrittsluft vor Eintritt in die Brennkammer (2) durch einen Rekuperator (43) zur Vorwärmung durch Wärme aus dem Entnahmestrom (22) und/ oder aus dem Rezirkulationsstrom (12) geleitet wird.

## Claims

1. Method for eliminating CO2 from a combined heat and power plant, **characterized in that** the gas flow which is expanded in a gas turbine (35) is divided after a high-pressure turbine (3) into a first part mass flow and a second part mass flow, the first part mass flow is expanded further performing expansion work, its waste heat usefully extracted and this first part mass flow is then recirculated into the intake flow of the gas turbine (35), and **in that** the second part mass flow is diverted as a take-off flow (22), cooled and the CO2 eliminated therefrom.

2. Method according to claim 1, **characterized in that** the extraction flow (22) is cooled in an HRSG/heat exchanger (4), the CO2 eliminated in a CO2 absorber (6) and the extraction flow (22) then expanded in an air turbine (16).

3. Method according to claim 2, **characterized in that** the extraction flow (22) is heated again in the HRSG/heat exchanger (4) before expansion in the air turbine (16).

4. Method according to one of claims 1 or 2, **characterized in that** the extraction flow (22) is cooled further in a cryogenic precooler (24), accelerated in a swirl nozzle and CO2 is cryogenically eliminated in the swirl nozzle.

5. Method according to any of claims 1 to 4, **characterized in that** the first part mass flow is expanded in a low-pressure turbine (17), wherein the low-pressure turbine (17) is part of a single-shaft gas turbine or, as a performance turbine, part of a multi-shaft gas turbine.

6. Method according to any of claims 1 to 5, **characterized in that** the first part mass flow is expanded in a separate air turbine (16a).

7. Method according to any of claims 1 to 6, **characterized in that** the guide vane carrier (21) of the turbine, and/or a flow divider (25) for dividing the gas flow in the region of the flow division and/or along the extraction flow (22), and/or the line provided for the extraction flow to an HRSG/heat exchanger (4), and/or the line provided for the recirculation flow to an HRSG (9), is at least partially vapour-cooled.

8. Method according to any of claims 1 to 7, **characterized in that** the proportion of the extraction flow (22) to the total mass flow of the gas turbine can be regulated by a variable geometry of a flow divider (25).

9. Method according to one of claims 2 or 3, **characterized in that** the extraction flow (22) can be regulated by a variable guide vane of the air turbine (16).

10. Combined heat and power plant with CO2 elimination, consisting of at least one gas turbine (35) which comprises at least one compressor (1), at least one combustion chamber (2) and at least one turbine, **characterized in that** the turbine which is arranged downstream of a last combustion chamber (2) of the gas turbine (35), after a high-pressure turbine (3) has a flow division for dividing the gases flowing through the turbine into an extraction flow (22) and a recirculation flow (12) into the intake flow of the compressor, wherein the CO2 eliminator is provided in the line for the extraction flow (22), and **characterized in that** a turbine (17, 16a) is arranged in the recirculation flow (12) downstream of the high-pressure turbine (3).

11. Combined heat and power plant according to claim 10, **characterized in that** a low-pressure turbine (17) is arranged downstream of the high-pressure turbine (3), wherein a flow divider (25) for diverting an extraction flow (22) is arranged between the high-pressure turbine (3) and the low-pressure turbine (17).

12. Combined heat and power plant according to claim 10 or 11, **characterized in that** a diffuser (31) is arranged downstream of the high-pressure turbine (3), at least two outlet lines connect to the diffuser, wherein at least one outlet line is provided for the extraction flow (22) and at least one outlet line is provided for the recirculation flow (12), wherein at least one outlet line guides the recirculation flow (12) to an air turbine (16a).

13. Combined heat and power plant according to one of claims 11 or 12, **characterized in that** after the low-pressure turbine (17) or air turbine (16a), an HRSG (9) and a cooler (11) are provided in a recirculation line through which the recirculation flow (12) is recirculated into the compressor (1), and **in that** an HRSG/heat exchanger (4) is provided in the line for the extraction flow (22).

14. Combined heat and power plant according to any of claims 10 to 13, **characterized in that** an air turbine (16) is arranged downstream of the CO2 eliminator.

15. Combined heat and power plant according to claims 11 and 14, **characterized in that** an HRSG/heat exchanger (4) is provided between the flow divider (25) and the CO2 eliminator, and between the CO2 eliminator and the air turbine (16a), for cooling the extraction flow (22) upstream of the CO2 eliminator and for reheating the low-CO2 pressurized exhaust gases (15).

16. Combined heat and power plant according to claim 13, **characterized in that** a cryogenic precooler (24) and a swirl nozzle (32) for CO2 elimination are arranged downstream of the HRSG/heat exchanger (4) for use of the waste heat from the extraction flow (22).

17. Combined heat and power plant according to any of claims 10 to 16, **characterized in that** the flow divider (25) or the diffuser (31), and/or the extraction points, and/or lines for the extraction flow (22) and/or for the recirculation flow (12), have at least partially a vapour cooling.

18. Combined heat and power plant according to claim 11 or any of claims 12 to 17 if according to claim 11, **characterized in that** the flow divider has an adjustable geometry for regulating the recirculation conditions.

19. Combined heat and power plant according to any of claims 10 to 12, **characterized in that** the air turbine (16a) has at least one adjustable row of guide vanes.

20. Combined heat and power plant according to claim 14, **characterized in that** the air turbine (16a) for expansion of the recirculation flow (12) and the air turbine (16) for expansion of the low-CO2 pressurised exhaust gases (15) are arranged on one shaft.

21. Combined heat and power plant according to any of claims 10 to 20, **characterized in that** the compressor outlet air, before entering the combustion chamber (2), is conducted through a recuperator (43) for preheating using heat from the extraction flow (22) and/or from the recirculation flow (12).

## Revendications

1. Procédé d'élimination de CO2 hors d'une centrale combinée, **caractérisé en ce que** le flux de gaz qui est détendu dans une turbine à gaz (35) est divisé, après une turbine à haute pression (3), en un premier flux massique partiel et en un deuxième flux massique partiel, le premier flux massique partiel étant détendu en effectuant un travail d'expansion, sa chaleur dégagée étant évacuée de manière utile et ce premier flux massique partiel étant remis en circulation dans le flux d'aspiration de la turbine à gaz (35) et **en ce que** le deuxième flux massique partiel est dérivé en tant que flux de prélèvement (22), refroidi et le CO2 est éliminé de celui-ci.

2. Procédé selon la revendication 1, **caractérisé en ce que** le flux de prélèvement (22) est refroidi dans un HRSG/échangeur de chaleur (4), le CO2 est éliminé dans un absorbeur de CO2 (6) et le flux de prélèvement (22) est ensuite détendu dans une turbine à air (16).

3. Procédé selon la revendication 2, **caractérisé en ce que** le flux de prélèvement (22) est à nouveau réchauffé avant l'expansion dans la turbine à air (16) dans le HRSG/échangeur de chaleur (4).

4. Procédé selon l'une des revendications 1 ou 2, **caractérisé en ce que** le flux de prélèvement (22) est à nouveau refroidi dans un pré-refroidisseur cryogénique (24), accéléré dans une buse et le CO2 est éliminé de manière cryogénique dans la buse.

5. Procédé selon l'une des revendications 1 à 4, **caractérisé en ce que** le premier flux massique partiel est détendu dans une turbine à basse pression (17), la turbine à basse pression (17) faisant partie d'une turbine à gaz à un arbre ou fait partie, en tant que turbine de puissance, d'une turbine à arbres multiples.

6. Procédé selon l'une des revendications 1 à 5, **caractérisé en ce que** le premier flux massique partiel est détendu dans une turbine à air (16a) séparée.

7. Procédé selon l'une des revendications 1 à 6, **caractérisé en ce que** le support d'aubes directrices (21) de la turbine et/ou un diviseur d'écoulement (25) pour la division du flux de gaz au niveau de la division d'écoulement et/ou le long du flux de prélèvement (22) et/ou la conduite prévue pour le flux de prélèvement vers un HRSG / échangeur de chaleur (4) et/ou la conduite prévue pour le flux de remise en circulation vers un HRSG (9) est refroidi par vapeur au moins partiellement.

8. Procédé selon l'une des revendications 1 à 7, **caractérisé en ce que** la part du flux de prélèvement (22) dans le flux massique total de la turbine à gaz peut être régulée par une géométrie variable d'un diviseur d'écoulement (25).

9. Procédé selon l'une des revendications 2 ou 3, **caractérisé en ce que** le flux de prélèvement (22) peut être régulé par une aube directrice variable de la turbine à air (16).

10. Centrale combinée avec élimination de CO2 constituée d'au moins une turbine à gaz (35), qui est constituée d'au moins un compresseur (1), d'au moins une chambre de combustion (2) et d'au moins une turbine, **caractérisée en ce que** la turbine, qui est disposée en aval d'une dernière chambre de combustion (2) de la turbine à gaz (35), comprend, après une turbine à haute pression (3), une division d'écoulement pour la division des gaz s'écoulant à travers la turbine en un flux de prélèvement (22) et un flux de remise en circulation (12) dans le flux d'aspiration du compresseur, l'éliminateur de CO2 étant prévu dans la conduite pour le flux de prélèvement (22) et **caractérisé en ce que**, en aval de la turbine à haute pression (3), dans le flux de remise en circulation (12), se trouve une turbine (17, 16a).

11. Centrale combinée selon la revendication 10, **caractérisée en ce que**, en aval de la turbine à haute pression (3), se trouve une turbine à basse pression (17), un diviseur d'écoulement (25) pour la dérivation d'un flux de prélèvement (22) étant disposé entre la turbine à haute pression (3) et la turbine à basse pression (17).

12. Centrale combinée selon la revendication 10 ou 11, **caractérisée en ce que**, en aval de la turbine à haute pression (3) se trouve un diffuseur (31), au niveau duquel se raccordent au moins deux conduites de sortie, au moins une conduite de sortie étant prévue pour le flux de prélèvement (22) et au moins une conduite de sortie étant prévue pour le flux de remise en circulation (12), au moins une conduite de sortie conduisant le flux de remise en circulation (12) vers une turbine à air (16a).

13. Centrale combinée selon l'une des revendications 11 à 12, **caractérisée en ce que**, après la turbine à basse pression (17) ou la turbine à air (16a), se trouve un HRSG (9) et un refroidisseur (11) dans une conduite de remise en circulation à travers laquelle le flux de remise en circulation (12) est remis en circulation vers le compresseur (1), et **en ce qu'**un HRSG / échangeur de chaleur (4) est prévu dans la conduite pour le flux de prélèvement (22).

14. Centrale combinée selon la revendication 10 à 13, **caractérisée en ce que**, en aval de l'éliminateur de CO2, se trouve une turbine à air (16).

15. Centrale combinée selon les revendications 11 et 14, **caractérisée en ce que**, entre le diviseur d'écoulement (25) et l'éliminateur de CO2 ainsi qu'entre l'éliminateur de CO2 et la turbine à air (16a), se trouve un HRSG / échangeur de chaleur (4) pour le refroidissement du flux de prélèvement (22) avant l'éliminateur de CO2 et le réchauffage des gaz d'échappement sous pression (15) pauvres en CO2.

16. Centrale combinée selon la revendication 13, **caractérisée en ce que**, après le HRSG / échangeur de chaleur (4), se trouve, pour l'utilisation de la chaleur dégagée du flux de prélèvement (22) un pré-refroidisseur cryogénique (24) et une buse (32) pour l'élimination du CO2.

17. Centrale combinée selon les revendications 10 à 16, **caractérisée en ce que** le diviseur d'écoulement (25) ou le diffuseur (31) et/ou les points de prélèvement et/ou les conduites présentent, pour le flux de prélèvement (22) et/ou pour le flux de remise en circulation (12) au moins partiellement un refroidissement par vapeur.

18. Centrale combinée selon la revendication 11 ou selon l'une des revendications 2 à 17, si selon la revendication 11, **caractérisée en ce que** le diviseur d'écoulement présente une géométrie réglable pour la régulation du rapport de remise en circulation.

19. Centrale combinée selon l'une des revendications 10 à 12, **caractérisée en ce que** la turbine à air (16a) comprend au moins une série d'aubes directrices réglable.

20. Centrale combinée selon la revendication 14, **caractérisée en ce que** la turbine à air (16a) pour l'expansion du flux de remise en circulation (12) et la turbine à air (16) pour l'expansion des gaz d'échappement sous pression (15) pauvres en C02 sont disposées sur un arbre.

21. Centrale combinée selon l'une des revendications 10 à 20, **caractérisée en ce que** l'air de sortie du compresseur est conduit, avant l'entrée dans la chambre de combustion (2), à travers un récupérateur (43) pour le pré-chauffage par la chaleur provenant du flux de prélèvement (22) et/ou du flux de remise en circulation (12).
